# EUROPEAN PATENT SPECIFICATION

(11) **EP 0 949 146 B1**
(45) Date of publication and mention of the grant of the patent: **25.05.2005**
(21) Application number: 99302339.9
(22) Date of filing: 25.03.1999
(51) Int. Cl.: B65B 13/32

(54) **Strap welding tool**
Streifensiegelapparat
Outil de soudage d'un lien de cerclage

(30) Priority: 03.04.1998 US 54715
(43) Date of publication of application: 13.10.1999
(73) Proprietor: ILLINOIS TOOL WORKS INC., Glenview, Illinois 60025 (US)
(72) Inventor: Figiel, Janusz, Mount Prospect, Illinois 60056 (US); Drabarek, Peter, Chicago, Illinois 60630 (US)
(74) Representative: Rackham, Stephen Neil

(56) References cited:
- CH-A- 477 325
- DE-A- 4 014 305

## Description

The invention relates generally to st rapping tools, and more particularly to improved plastic strap welding tools useable in combination with strap tensioning tools and methods therefor.

In load packaging operations, it is known generally to weld overlapping portions of plastic strap tensioned about the load. US-A-3,654, 033, discloses a pneumatically operated strapping tool that forms a friction-fused joint, or weld, by vibrating contacting interfaci al surfaces of overlapping plastic strap portions. The strapping tool includes a clamping member for anchoring a free strap end portion, and a rotatable feed wheel cooperating with an anvil foot to engage a feed strap portion, which is tensioned about the load. A clutch engagably couples the feed wheel to a pneumatic motor, which also vibrates a jaw that welds the overlapping strap portions. The motor stalls and tensioning stops at a specified strap tension, and a pneumatically actuated ram disengages the motor from the feed wheel and engages a feed wheel brake, which maintains feed wheel tension on the tensioned strap during welding. The actuated ram also moves the vibrating jaw into frictional engagement with the overlapping strap portions. As the vibrating jaw moves toward the overlapping strap portions, a shearing edge severs the upper strap, and the overlapping strap portions are subsequently welded together. Thereafter, pressure is maintained on the welded overlapping strap portions for a cool down period to complete the weld.

US-A-5,380,393, entitled "Hand Strapping Tool", discloses a strapping tool having a pneumatic circuit for automatically controlling tool operation, including the timing and duration of strap welding and the cool down period. A pneumatically actuated ram extended after strap tensioning pivots a cam that moves a vibrating welding plate into contact with overlapping strap portions to form a weld. Vibration of the welding plate terminates after a time period controlled by the accumulation of air pressure in a chamber. Thereafter, air bled from a cylinder counter-pivots the cam to move the welding plate away from the welded strap portions after a cool down period.

DE-A-4014305 (equivalent to US-A-5141591) discloses a strapping tool with a welding head between two clamping jaws, for welding the overlapping ends of the strap. The clamping jaws each hold only one end of the strap and one of the clamping jaws moves in synchronism with the welding head to avoid shear forces on the strap.

Prior art pneumatic strapping tools require many system components that increase the size and weight of the tool, and increase costs related to tool manufacturing, operation and maintenance. The tool of US-A-3,564,033, for example, requires a pneumatically actuated ram for disengaging the air motor from the feed wheel, engaging the feed wheel brake, and moving the vibrating jaw into engagement with the overlapping strap portions. US-A-5,380,393 requires pneumatic rams for moving the welding plate into contact with the overlapping strap portions, and a combination of cylinders, chambers and valves for controlling the timing and duration of various tool operations. Although the pneumatic circuit of US-A-5,380,393 automates many strapping operations performed manually in prior art tools, control and timing of the various tool operations is relatively imprecise, producing inconsistent strap tension and weld results.

Prior art strapping tools, including those discussed above, also have generally a relatively long base plate disposed between the strap and the load during strap tensioning and welding. Thereafter, the base plate is removed from between the tensioned strap and load. The relatively long base plate, however, has a tendency to create slack in the tensioned strap after its removal, particularly in applications where the load is relatively small or shaped irregularly. The loss in strap tension depends generally on the size of the base portion and on the size of the load, and in many cases results in inadequately tensioned strap.

The present invention is drawn toward advancements in the art of strapping tools generally, and more particularly to strapping tools for forming friction fused joints, or welds, by vibrating contacting interfacial surfaces of overlapping strap portions, especially plastic strap portions.

Accordingly, in one aspect, the invention consists in a strapping tool according to claim 1.

In a second aspect , the invention consists in a method according to claim 5.

An advantage of this invention is that strap welding tools and methods can be provided having relatively small base plates to reduce loss of strap tension upon removal of the tool from strap tensioned about a load, particularly strap tensioned about relatively small and irregularly shaped loads.

Preferably the strap welding tool comprises a base plate having the first support member on a leading end portion thereof, the second support member on a second portion thereof, and a third support member cooperating with a tensioning gripper movable to engage and retain a free strap end portion during strap tensioning on a trailing end portion of the base plate, the second portion of the base plate being intermediate the leading and trailing end portions thereof, and preferably the leading and trailing end portions sloping downwardly away from the second portion.

Preferably the columnar strength of a strap portion engagable by the vibrating welding pad is reduced by deforming the strap portion, and more particularly by bending the strap portion proximate the welding pad, and preferably forming a gap at the bend between the overlapping strap portions.

A particular embodiment in accordance with the present invention will now be described with reference to the accompanying drawings; in which:-
FIG. 1 is a partial side elevational view of an exemplary cam operated strapping tool for welding overlapping strap portions;
FIG. 2a is a partial sectional view of a first cam member of FIG. 1;
FIG. 2b is a partial sectional view of a second cam member of FIG. 1;
FIG. 2c is a partial sectional view of a third cam member of FIG. 1;
FIG. 3 is a strap welding tool operational flow diagram; and,
FIG. 4 is a partial side elevational view of overlapping strap portions on an exemplary base plate of the strapping tool.

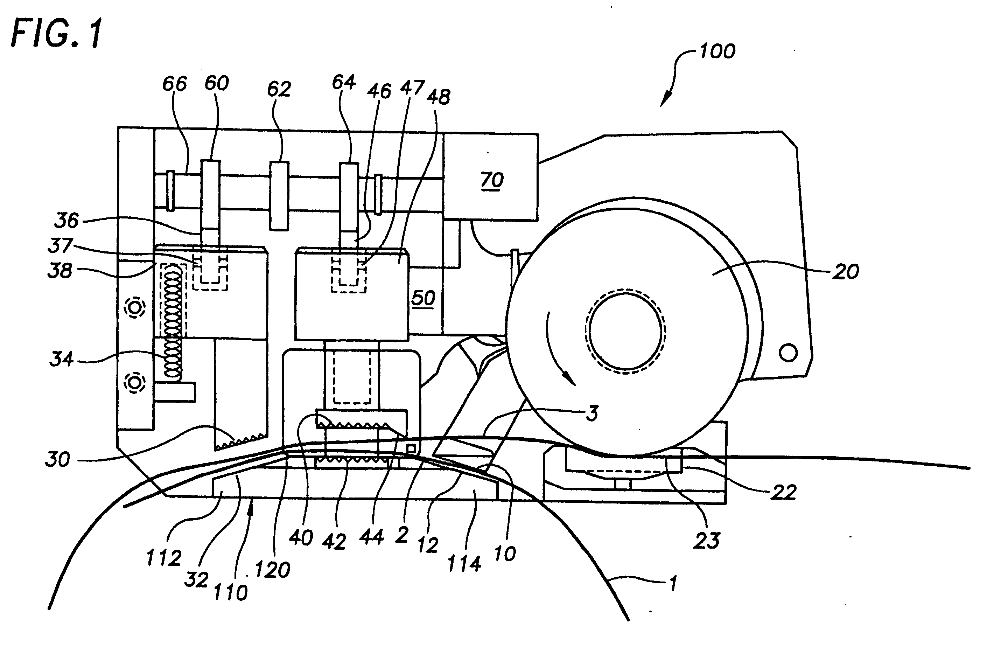

FIG. 1 illustrates a strapping tool 100 for welding a strap 1 tensioned about a load, not shown. The tool 100 comprises generally a tensioning gripper 10 movable toward a tension support 12 to engage and retain a free strap end portion 2 therebetween during strap tensioning. The gripping of the free strap end portion 2 may be controlled by manually depressing a gripping switch that actuates the tensioning gripper 10. A rotatable feed wheel 20 is movable toward a foot member 22 to engage and feed a feed strap portion 3 disposed therebetween. The tensioning of the feed strap portion 3 may be initiated by manually depressing a tensioning switch that actuates an air motor rotatably driving the feed wheel 20. The air motor stalls and the feed wheel 20 stops tensioning when a pre-determined level of strap tension is applied, as is known generally. The feed strap portion 3 partially overlaps the free strap portion 2 at a strap welding position where the overlapping strap portions are welding together as discussed further below.

In the exemplary embodiment, only the feed strap portion 3 is disposed between the feed wheel 20 and the foot member 22, and the foot member 22 has a relatively smooth surface 23 to permit sliding movement of the feed strap portion 3 therebetween during tensioning. In an alternative embodiment, the free strap end portion 2 and the feed strap portion 3 are both disposed between the feed wheel 20 and the foot member 22, and the foot member 22 has a toothed surface 23 to engage and retain the free strap end portion 2 while the feed strap portion 3 slides relative thereto during tensioning. Tensioning with only the feed strap portion 3 between the feed wheel 20 and the foot member 22 reduces strap slippage during tensioning, and permits reducing the effective base length of the tool, thereby reducing loss of strap tension upon removal of the tool from between the tensioned strap and the load, particularly small and irregular loads, as discussed further below.

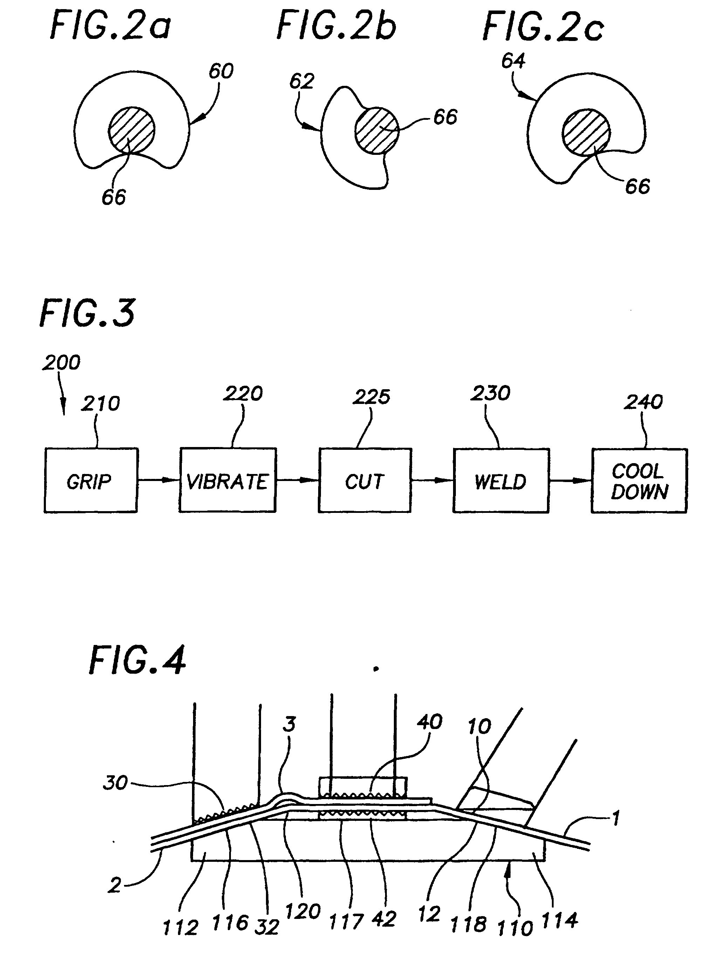

FIGS. 1 and 4 illustrate the tool 100 including a sealing gripper 30 movable toward a first, or sealing, support member 32 to engage and retain overlapping strap portions after tensioning by the feed wheel 20 as discussed above. FIG. 1 illustrates the sealing gripper 30 biased away from the first support member 32 by a compressed spring member 34 or other known means. The tool 100 also includes a vibratable welding pad 40 movable toward a second, welding, support member 42. The welding pad 40 is similarly biased away from the second support member 42. A vibrator motor 50 is actuatable to vibrate the welding pad 40, and preferably the vibrator motor 50 is a pneumatically operated air motor.

A first cam member 60 is operable to move the sealing gripper 30 against its bias and toward the first support member 32 to engage and retain tensioned strap disposed therebetween. A second cam member 62 is operable to enable the vibrator motor 50, which vibrates the welding pad 40, for example by actuating a pneumatic valve or switch. And a third cam member 64 is operable to move the welding pad 40 against its bias and toward the second support member 42 to engage and weld overlapping strap portions disposed therebetween.

FIGS. 2a, 2b and 2c illustrate an exemplary cam assembly configuration wherein the first, second, and third cam members 60, 62 and 64 each have corresponding lobes and depressions for accurately controlling the actuation and timing of the sealing gripper 30, the vibration motor 50, and the welding pad 40, respectively. The radial position of the lobes and depressions of the cam members 60, 62 and 64 may vary depending upon the particular configuration of the tool. The position of the second cam member 62, for example, depends on the location of the vibrator motor 50 switch. The welding operation of the present invention is thus controlled without the relatively imprecisely controllable air cylinder actuated rams of the prior art.

The tool 100 preferably includes a first roller member 36 rotatable about an axle 37 coupled to an upper portion 30 38 of the sealing gripper 30. A second roller member 46 is similarly rotatable about an axle 47 coupled to an upper portion 48 of the welding pad 40. The first and second roller member 36 and 46 are engagable by the first and third cam members 60 and 64, respectively, to accurately actuate the sealing gripper 30 and the welding pad 40. The first and second roller members 36 and 46 also minimize mechanical wear and extend the operable life of the tool.

FIG. 3 is a flow diagram 200 illustrating generally the strap welding operation of the strapping tool 100. The sealing gripper 30 is moved toward the first support member 32 with the first cam member 60 to engage and retain tensioned strap disposed therebetween in a grip step 210. The vibrator motor 50 is actuated by the second cam member 62 to vibrate the welding pad 40 in a vibrate step 220, and the vibrating welding pad 40 is moved toward the second support member 42 by the third cam member 64 to engage and weld the overlapping strap portions in a weld step 230. The second cam member 62 disables the vibrator motor 50 while the third cam member 64 maintains the welding pad 40 positioned toward the second support member 42 to apply pressure on the welded strap portions for a cool down period after the vibrator motor 50 is disabled in a cool down step 240. Usage and wear on the vibrator motor 50 is minimized by operating the vibrator motor 50 only when required for welding, thereby extending the usable life thereof. The welding pad 40 is moved away from the second support member 42 upon expiration of the cool down period, and the sealing gripper 30 may be moved away from the gripper support member 32 any time after expiration of the cool down period.

FIGS. 1 and 3 illustrate the first, second, and third cam members 60, 62 and 64 preferably rotatably supported on a common drive shaft 66 to form a cam assembly rotatably drivable by a cam drive motor 70 coupled to the common drive shaft 66. Rotatably supporting the first, second and the third cam members 60, 62 and 64 with the common drive shaft 66 accurately and precisely controls actuation of the sealing gripper, actuation of the welding pad and the cool down time period, without the inconsistencies and variations inherent in the prior art pneumatically controlled welding operations. The cam drive motor 70 is preferably a pneumatically operated air motor, and is actuatable for example by manually depressing a weld switch after tensioning. The welding operations, or steps, performed by the cam members 60, 62 and 64, as illustrated generally in FIG. 3, proceed automatically and in controlled sequence upon rotation of the common drive shaft 66, whereafter the cam drive motor 70 may be disabled automatically until initiation of a subsequent welding operation by subsequent depressing of the weld switch.

FIG. 1 illustrates the tool 100 further comprising a strap shearing edge 44, which is preferably serrated, disposed on the welding pad 40 for cutting the upper strap portion, and more particularly cutting the feed strap portion ultimately engaged by the vibrating welding pad 40 as the vibrating welding pad 40 is moved toward the second support member 42, but before welding the overlapping strap portions. The flow diagram of FIG. 3 illustrates a strap severing or cut step 225 occurring after the vibrate step 220 and before the weld step 230. Cutting the upper strap portion has the advantage of permitting the cut upper strap portion to vibrate freely under the influence of the vibrating welding pad 40 as required to ensure a complete weld.

FIGS. 1 and 4 illustrate the strapping tool 100 further comprising a base plate 110 having generally reduced dimensions, particularly a reduced longitudinal dimension between a leading end portion 112 and a trailing end portion 114 thereof. The reduced dimensions of the base plate 110 facilitate strapping small and irregular shaped loads without loss of strap tension upon removal of the base plate 110 from between the load and the strap after tensioning and welding. The leading end portion 112 and the trailing end portion 114 of the base plate 110 are preferably disposed at angles sloping downwardly and away from the second support member 42, which is located therebetween, thereby further reducing the loss of strap tension upon removal of the base plate 110 by reducing a thickness of the base plate.

FIG. 4 illustrates the first support member 32 disposed on a first portion 116 corresponding generally to the leading end portion 112 of the base plate 110, and the second support member 42 disposed on a second portion 117 of the base plate 110. The third support member 12 is disposed on a third portion 118 corresponding generally to the trailing end portion 114 of the base plate 110.

In embodiments where the sealing gripper 30 and welding pad 40 are located very near each other, it is desirable to reduce a column strength of the overlapping strap portions prior to welding, and particularly the strap portion engaged by the vibrating welding pad 40. The relatively closely spaced sealing gripper 30 and welding pad 40 render the overlapping strap portions relatively rigid and inflexible, thereby interfering with, or obstructing, vibration thereof by the vibrating weld pad 40. This is especially true where the distance between the sealing gripper 30 and the welding pad 40 is less than approximately 2 inches (50 mm), as in the exemplary embodiment where a base plate 110 of the tool 100 having relatively reduced dimension forms the first and second support members 32 and 42 for the sealing gripper 30 and the welding pad 40, respectively. Reducing the column strength of the strap portion engaged by the vibrating welding pad 40 ensures liberal vibratory movement of the strap portion, as is required for proper welding.

FIG. 4. illustrates the upper strap portion 3 of the overlapping strap portions at least partially deformed to reduce the column strength thereof, deformation being preferably in a direction away from the first and second support surfaces 32 and 42 between the sealing gripper 30 and the welding pad 40. FIGS. 1 and 4 illustrate the first support member 32 located in a first plane, and the second support member 42 located in a second plane at an angle relative to the first plane, wherein the first and second support members 32 and 42 intersect to form a vertex 120. The vertex 120 may be formed alternatively by another member, for example a rod or bar or other member disposed across the base plate 110 above a common plane of the first and second support members. The column strength is reduced by bending the overlapping strap portions over the vertex 120. A gap is preferably formed between the upper strap portion 3 and a lower strap portion 2 of the overlapping strap portions to further reduce the rigidity or column strength of the upper strap portion 3, and permit a greater degree of vibrational freedom under the vibratory action of the welding pad 40 to ensure an even stronger weld.

## Claims

1. A strapping tool (100) for welding overlapping plastics strap portions, the strapping tool including a sealing gripper (30) movable toward a first support member (32) lying in a first plane to engage and retain tensioned strap (1) disposed between the sealing gripper (30) and the first support member (32); and,
a vibratable welding pad (40) movable toward a second support member (42) lying in a second plane to weld overlapping strap portions disposed between the welding pad (40) and the second support member (42);
**characterised by** a vertex (120) located between the sealing gripper (30) and the welding pad (40), the overlapping strap portions being, in use, disposed over the vertex (120), so that the overlapping strap portion between the sealing gripper (30) and the vibratable welding pad (40) is bent over the vertex (120) so that vibratory movement imparted by the vibratable welding pad (40) to the tensioned strap (1) in the plane of the second support member (32) is less limited by the sealing gripper (30) engaging and retaining said tensioned strap (1).

2. The strapping tool according to claim 1, wherein the first support member (32) is disposed at an angle relative to the second support member (42), the vertex (120) formed by an intersection of the first support member (32) and the second support member (42).

3. The strapping tool according to claim 1 or claim 2, further comprising a base plate (110), the first support member (32) disposed on a leading end portion of the base plate (110) and the second support member (42) disposed on a second portion of the base plate (110).

4. The strapping tool according to claim 3, wherein the base plate (110) has a trailing end portion (12) disposed at an angle relative to the second support member (42), the leading end port ion (32) and the trailing end portion (12) sloping downwardly away from the second support member (42) to reduce the thickness of the base plate (110) at the end portions.

5. A method for welding overlapping plastics strap portions with a strapping tool, the method comprising the steps of:
engagably retaining tensioned strap (1) between a sealing gripper (30) and a first support member (32 ) ; and,
welding overlapping strap portions disposed between a vibrating welding pad (40) and a second support member (42) ;
**characterised by** keeping bent the overlapping strap portions which are kept between the sealing gripper (30) and the welding pad (40) before and during welding so that the vibratory movement imparted by the vibratable welding pad (40) to the tensioned strap (1) is less limited by the sealing gripper (30) engaging and retaining said tensioned strap (1).

6. The method according to claim 5, further comprising cutting an upper strap portion (3) before welding the overlapping strap portions.

7. The method according to claim 6, further comprising cutting the upper strap portion with a shearing edge (44) on the welding pad (40) as the vibrating welding pad (40) moves toward the second support member (42) before welding the overlapping strap portions.

8. The method according to claim 5, further comprising tensioning a feed strap portion (3) disposed about a load with a strap tensioning feed wheel (20) , and retaining a strap free end portion with a tensioning gripper (10) during strap tensioning.

9. The method according to any one of claims 5 to 8, further comprising deforming the strap portion engagable by the vibratable welding pad (40) by bending the overlapping strap portions over a vertex (120) between the sealing gripper (30) and the welding pad (40).

10. The method according to any one of claims 5 to 9, further comprising forming a gap between an upper strap portion (3) and a lower strap portion (2) of the overlapping strap portions at the bend in the overlapping strap portions.

## Patentansprüche

1. Umreifungswerkzeug (100) zum Schweißen überlappender Kunststoffbandabschnitte, wobei das Umreifungswerkzeug aufweist: einen Verschließgreifer (30), welcher zu einem ersten Stützelement (32) hin, welches in einer ersten Ebene liegt; zum Ergreifen und Festhalten von gespanntem Band (1), welches zwischen dem Verschließgreifer (30) und dem ersten Stützelement angeordnet ist, beweglich ist; und
ein vibrierfähiges Schweißelement (40), welches zu einem zweiten Stützelement (42) hin, welches in einer zweiten Ebene liegt, zum Schweißen überlappender Bandabschnitte, welche zwischen dem Schweißelement (40) und dem zweiten Stützelement (42) angeordnet sind, beweglich ist;
**gekennzeichnet durch** einen Scheitel (120), welcher zwischen dem Verschließgreifer (30) und dem Schweißelement (40) angeordnet ist, wobei die überlappenden Bandabschnitte im Gebrauch über dem Scheitel (120) angeordnet sind, so dass der überlappende Bandabschnitt zwischen dem Verschließgreifer (30) und dem vibrierfähigen Schweißelement (40) über den Scheitel (120) gebogen wird, so dass eine dem gespannten Band (1) **durch** das vibrierfähige Schweißelement verliehene (40) vibrierende Bewegung in der Ebene des zweiten Stützelementes (32) **durch** den Verschließgreifer (30), welcher das gespannte Band erfasst und festhält, weniger beschränkt ist.

2. Umreifungswerkzeug nach Anspruch 1, wobei das erste Stützelement (32) in einem Winkel relativ zum zweiten Stützelement (42) angeordnet ist, wobei der Scheitel (120) durch eine Überschneidung des ersten Stützelements (32) und des zweiten Stützelements (42) geformt ist.

3. Umreifungswerkzeug nach Anspruch 1 oder 2, ferner enthaltend eine Basisplatte (110), wobei das erste Stützelement (32) auf einem vorderen Endteil der Basisplatte (110) angeordnet ist und wobei das zweite Stützelement (42) auf einem zweiten Endteil der Basisplatte (110) angeordnet ist.

4. Umreifungswerkzeug nach Anspruch 3, wobei die Basisplatte (110) einen relativ zum zweiten Stützelement (42) in einem Winkel angeordneten hinteren Endteil (12) aufweist, wobei der vordere Endteil (32) und der hintere Endteil (12) nach unten hin weg vom zweiten Stützelement (42) abfallen, um die Stärke der Basisplatte (110) an den Endteilen zu reduzieren.

5. Verfahren zum Schweißen überlappender Kunststoffbandabschnitte mit einem Umreifungswerkzeug, wobei das Verfahren die folgenden Schritte beinhaltet:
eingriffsmäßiges Festhalten von gespanntem Band (1) zwischen einem Verschließgreifer (30) und einem ersten Stützteil (32); und,
Schweißen überlappender Bandabschnitte, welche zwischen einem vibrierenden Schweißelement (40) und einem zweiten Stützelement (42) angeordnet sind;
**gekennzeichnet durch** Gebogenhalten überlappender Bandabschnitte, welche zwischen dem Verschließgreifer (30) und dem Schweißeiement (40) vor und während des Schweißens vorgehalten werden, so dass die vibrierende Bewegung die dem gespannten Band (1) **durch** das vibrierbare Schweißelement (40) verliehen wird, **durch** den Verschließgreifer (30), welcher das gespannte Band (1) erfasst und festhält, weniger beschränkt wird.

6. Verfahren nach Anspruch 5, ferner beinhaltend das Schneiden eines oberen Bandabschnitts (3) vor dem Verschweißen der überlappenden Bandabschnitte.

7. Verfahren nach Anspruch 6, ferner beinhaltend das Schneiden des oberen Bandabschnitts mit einer Scherkante (44) an dem Schweißelement (40), sobald das vibrierende Schweißelement (40) sich zu dem zweiten Stützelement (42) vor dem Schweißen der überlappenden Bandabschnitte hin bewegt.

8. Verfahren nach Anspruch 5, ferner beinhaltend das Spannen eines Versorgungsbandabschnitts (3), welcher um eine Ladung mit einem Band spannenden Versorgungsrad (20) angeordnet ist, und Halten eines bandfreien Endabschnitts mit einem Spanngreifer (10) während des Bandspannens.

9. Verfahren nach irgend einem der Ansprüche 5 bis 8, ferner beinhaltend ein Deformieren des durch das vibrierende Schweißelement (40) erfassbaren Bandabschnitts durch Biegen der überlappenden Bandabschnitte über einen Scheitel (120) zwischen dem Verschließgreifer (30) und dem Schweißelement (40).

10. Verfahren nach irgend einem der Ansprüche 5 bis 9, ferner beinhaltend das Ausbilden einer Lücke zwischen einem oberen Bandabschnitt (3) und einem unteren Bandabschnitt (2) der überlappenden Bandabschnitte an der Biegung in den überlappenden Bandabschnitten.

## Revendications

1. Outil de cerclage (100) pour souder des parties de bande en plastique chevauchantes, l'outil de cerclage comprenant une pince de scellage (30) déplaçable vers un premier élément de support (32) se trouvant dans un premier plan pour engager et retenir la bande tensionnée (1) disposée entre la pince de scellage (30) et le premier élément de support (32) ; et
un patin de soudage pouvant vibrer (40), déplaçable vers un deuxième élément de support (42) se trouvant dans un deuxième plan pour souder des parties de bande chevauchantes disposées entre le patin de soudage (40) et le deuxième élément de support (42) ;
**caractérisé par** un sommet (120) situé entre la pince de scellage (30) et le patin de soudage (40), les parties de bande chevauchantes étant, à l'utilisation, disposées au-dessus du sommet (120), de telle façon que la partie de bande chevauchante entre la pince de scellage (30) et le patin de soudage pouvant vibrer (40) soit recourbée sur le sommet (120) de telle façon que le mouvement vibratoire communiqué par le patin de soudage pouvant vibrer (40) à la bande tensionnée (1) dans le plan du deuxième élément de support (42) soit moins limité par la pince de scellage (30) engageant et retenant ladite bande tensionnée (1).

2. Outil de cerclage selon la revendication 1, dans lequel le premier élément de support (32) est disposé selon un angle par rapport au deuxième élément de support (42), le sommet (120) étant formé par une intersection du premier élément de support (32) et du deuxième élément de support (42).

3. Outil de cerclage selon la revendication 1 ou la revendication 2, comprenant en outre une plaque de base (110), le premier élément de support (32) étant disposé sur une partie d'extrémité de tête de la plaque de base (110) et le deuxième élément de support (42) étant disposé sur une deuxième partie de la plaque de base (110).

4. Outil de cerclage selon la revendication 3, dans lequel la plaque de base (110) a une partie d'extrémité de queue (12) disposée selon un angle par rapport au deuxième élément de support (42), la partie d'extrémité de tête (32) et la partie d'extrémité de queue (12) étant inclinées vers le bas depuis le deuxième élément de support (42) pour réduire l'épaisseur de la plaque de base (110) au niveau des parties d'extrémité.

5. Procédé pour souder des parties de bande en plastique chevauchantes avec un outil de cerclage, le procédé comprenant les étapes consistant à :
retenir de manière engagée la bande tensionnée (1) entre une pince de scellage (30) et un premier élément de support (32) ; et
souder les parties de bande chevauchantes disposées entre un patin de soudage vibrant (40) et un deuxième élément de support (42) ;
**caractérisé en ce que** sont maintenues recourbées les parties de bande chevauchantes qui sont maintenues entre la pince de scellage (30) et le patin de soudage (40) avant et pendant le soudage, de telle sorte que le mouvement vibratoire communiqué par le patin de soudage pouvant vibrer (40) à la bande tensionnée (1) soit moins limité par la pince de scellage (30) engageant et retenant ladite bande tensionnée (1).

6. Procédé selon la revendication 5, comprenant en outre le découpage d'un partie de bande supérieure (3) avant le soudage des parties de bande chevauchantes.

7. Procédé selon la revendication 6, comprenant en outre le découpage de la partie de bande supérieure avec un bord cisaillant (44) sur le patin de soudage (40) lorsque le patin de soudage vibrant (40) se déplace vers le deuxième élément de support (42) avant le soudage des parties de bande chevauchantes.

8. Procédé selon la revendication 5, comprenant en outre le tensionnement d'une partie de bande alimentée (3) disposée autour d'une charge avec une roue d'alimentation de tensionnement de bande (20), et la rétention d'une partie d'extrémité de bande libre avec une pince de tensionnement (10) durant le tensionnement de la bande.

9. Procédé selon l'une quelconque des revendications 5 à 8, comprenant en outre la déformation de la partie de bande engageable par le patin de soudage pouvant vibrer (40) par courbage des parties de bande chevauchantes sur un sommet (120) entre la pince de scellage (30) et le patin de soudage (40).

10. Procédé selon l'une quelconque des revendications 5 à 9, comprenant en outre la formation d'un espacement entre une partie de bande supérieure (3) et une partie de bande inférieure (2) des parties de bande chevauchantes au niveau de la courbure pratiquée sur les parties de bande chevauchantes.
